# EUROPÄISCHE PATENTSCHRIFT

(11) **EP 0 504 676 B1**
(45) Veröffentlichungstag und Bekanntmachung des Hinweises auf die Patenterteilung: **19.04.1995**
(21) Anmeldenummer: 92103835.2
(22) Anmeldetag: 06.03.1992
(51) Int. Cl.: G01L 5/00

(54) **Sensor zur Dehnungsmessung**
Sensor for strain measurement
Capteur de mesure de contraintes

(30) Priorität: 15.03.1991 CH 800/91
(43) Veröffentlichungstag der Anmeldung: 23.09.1992
(73) Patentinhaber: Straintec AG, CH-8044 Zürich (CH)
(72) Erfinder: Ryffel, Martin, CH-8044 Zürich (CH)
(74) Vertreter: Blum, Rudolf Emil Ernst

(56) Entgegenhaltungen:
- DE-A- 2 424 487
- DE-A- 2 537 369
- DE-A- 3 244 171

## Beschreibung

Die vorliegende Erfindung betrifft einen Sensor gemäss dem Oberbegriff des ersten Patentanspruches.

In der DE-A 25 37 369 sind Dehnungsaufnehmer beschrieben, bei denen am Ende einer Bohrung ein Messstab befestigt ist, dessen freies Ende mit einer Messeinrichtung zusammenwirkt, die den bei Belastung auftretenden Längenunterschied zwischen dem die Bohrung aufweisenden Bauteil und dem Messstab erfasst. Die Messvorrichtung ist als Rohrbiegekraftaufnehmer ausgebildet und ist an der Stelle der grössten Durchbiegung mit mindestens einem Dehnungsmessstreifen versehen.

Derartige Messaufnehmer haben den Nachteil, dass durch das Gewinde und die verschiedenen Dehnungslängen Ungenauigkeiten in der Messignalübersetzung auftreten.

Aus der DE-A-3 244 171 ist es bekannt, im Inneren einer Schraube ein rohrförmiges Kraftmesselement vorzusehen, das auf seiner Mantelfläche mit mehreren Dehnungsmessstreifen versehen ist. Gemessen wird hier die Dehnung des rohrförmigen Kraftmesselementes und nicht direkt die Dehnung des interessierenden Bauteiles.

Dasselbe Prinzip liegt der Lehre der NL-A-7 502 761 zugrunde. In einer Bohrung des zu messenden Bauteiles wird ein Dehnungsmessstab mit einem querschnittverminderten Abschnitt eingesetzt, welcher Abschnitt die Dehnungsmessstreifen trägt.

Aus der DE-A-3 010 168 ist es bekannt, einen Dehnungsmessstreifen mittels eines elastischen Körpers an eine ebene Fläche anzupressen. Zur Dehnungsmessung in einer Bohrung wird in dem Dokument keine Angabe gemacht.

Der Erfindung liegt die Aufgabe zugrunde einen Sensor zu schaffen, bei dem unter Vermeidung des Nachteiles die Dehnung als das Mass für die Kräfte und Spannungen direkt an dem die Bohrung umgebenen Material gemessen werden.

Diese Aufgabe wird erfindungsgemäss mit den kennzeichnenden Merkmalen des Patentanspruches 1 gelöst.

Der Vorteil der Erfindung ist darin zu sehen, dass der Körper mit seiner an den Dehnungsmessstreifen anliegenden Schicht unstarr gegenüber Tangentialkräften ist, wodurch deren Einfluss möglichst klein gehalten werden kann.

Es ist von Vorteil, wenn der Körper an einer Stirnseite einen dem Lochgrund angepassten Abschnitt hat und dass das Spannmittel eine Schraube ist, die zwecks Aufbringen eines Druckes auf den Körper in das Loch einschraubbar ist, um den Dehnungsmessstreifen gegen die Bohrungswand zu pressen.

Diese Ausführungsform zeichnet sich insbesondurch den einfachen Aufbau und Einbau aus.

Ferner ist es von Vorteil, wenn der Körper ein Druchgangsloch in axialer Richtung aufweist und dass das Spannmittel einen Gewindebolzen mit einem Kopfteil an einem Ende und mit einem Gewindeabschnitt am anderen Ende derart, dass ein eine glatte Mantelfläche aufweisender Schaftteil vorhanden ist, auf dem der Körper angeordnet ist, ein zylinderförmiges Zwischenstück mit einer axialen Durchgangsbohrung, das mit einer Stirnseite am Körper anliegend auf dem Gewindebolzen angeordnet ist, und eine Spannmutter umfasst, die auf den Gewindeabschnitt aufgeschraubt ist; wobei der zwischen Kopfteil und Zwischenstück angeordnete Körper durch den die Verschraubung erzeugbaren Druck verformbar ist, derart, dass der Dehnungsmessstreifen gegen die Bohrungswand gepresst wird. Bei dieser Ausführungsform muss lediglich eine Bohrung in dem entsprechenden Bauteil vorgesehen werden, um den als Baugruppe ausgebildeten Sensor einzusetzen. Als weiterer Vorteil ist der einfache Aufbau zu nennen.

Im folgenden wird die Erfindung anhand der beiliegenden Zeichnungen erläutert.

Es zeigen:
Figur 1 eine erste Ausführungsform eines erfindungsgemässen Sensors, und
Figur 2 eine zweite Ausführungsform eines erfindungsgemässen Sensors.

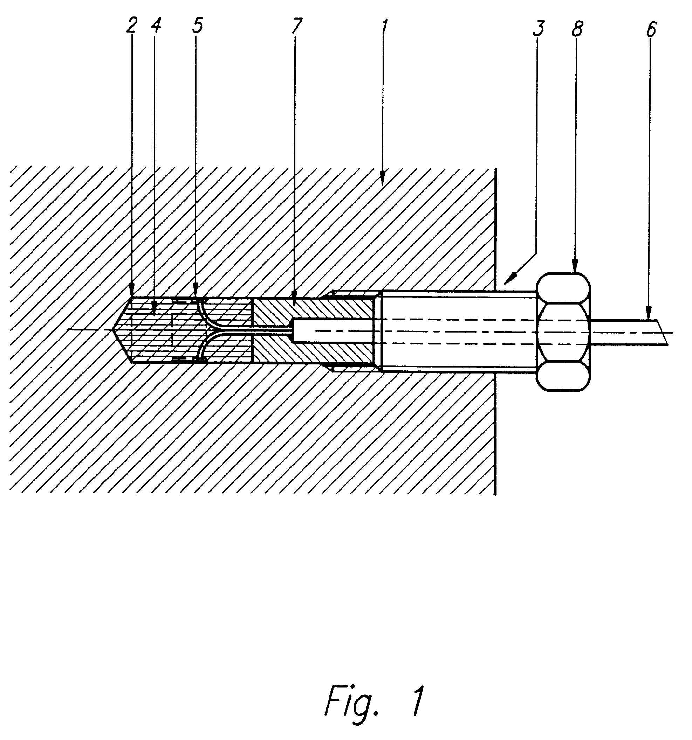

In Figur 1 ist in einem Maschinenteil 1 z.B. eine Säule, ein Zuganker oder dergleichen, eine mit einem Gewindeabschnitt versehene Blindbohrung 2 zur Aufnahme eines Sensors 3 vorgesehen. Der Sensor 3 enthält einen Körper 4 aus Elastomer, der am Grund der Blindbohrung anliegt. Hierzu hat der Körper an einer Stirnseite einen dem Grund der Blindbohrung angepassten Abschnitt und an der anderen Stirnseite eine ebene Fläche. Zwischen Bohrungswand und dem Körper 4 sind vier Dehnungsmessstreifen 5 eingelegt, die am Umfang des Körpers 4 gleichmässig verteilt angeordnet sind.

In dem Körper 5 sind Kanäle zum Herausführen der Anschlussdrähte 6 der Dehnungsmessstreifen 5 vorgesehen. Zum Sensor 3 gehört ferner ein zylinderförmiges Zwischenstück 7, das anliegend an den Körper 4 in der Blindbohrung 2 angeordnet ist. Das Zwischenstück 7 hat einen axialen Kanal für die Anschlussdrähte der Dehnungsmessstreifen 5. Der Sensor 3 umfasst weiterhin eine Sechskantschraube 8 mit einem axialen Durchgangsloch zum Herausführen der Anschlussleitung für die Dehnungsmessstreifen 5. Die Schraube 8 ist in den Gewindeabschnitt in der Blindbohrung 2 eingeschraubt. Durch das Eindrehen der Schraube 8 wird über das Zwischenstück 7 eine axiale Kraft auf den Elastomerkörper 4 aufgebracht. Diese Kraft bewirkt, dass die Dehnungsstreifen 4 gegen die Bohrungswand gepresst werden. Tritt durch Krafteinwirkung eine Dehnung im Bauteil 1 auf, wird von den Dehnungsmessstreifen in ein entsprechendes Ausgangssignal abgebgeben.

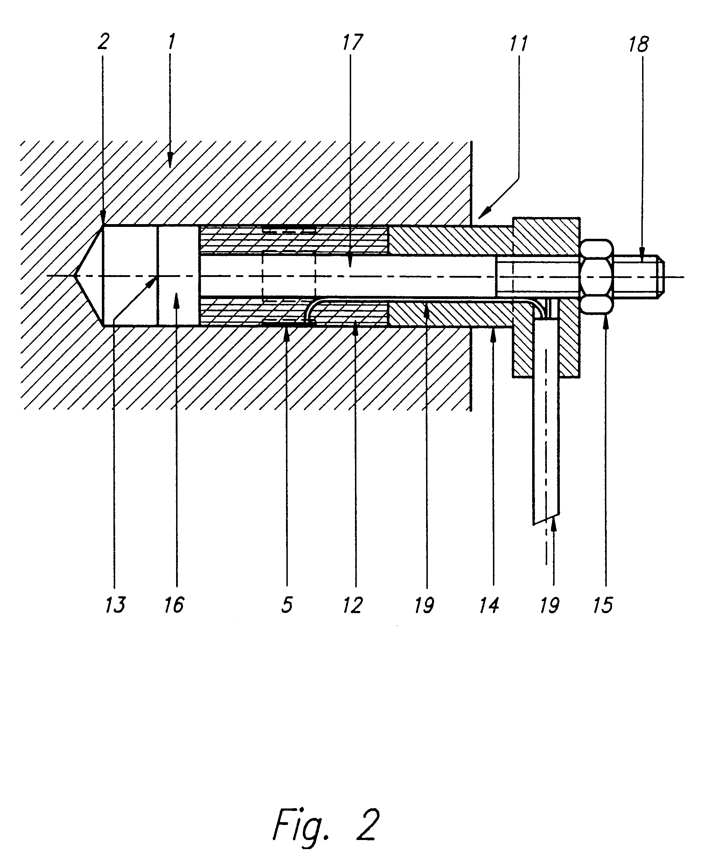

Wie Figur 2 zeigt, enthält der Sensor 11 vier Dehnungsmessstreifen 5, einen zylinderförmigen Körper 12 aus Elastomer, einen Gewindebolzen 13, ein zylinderförmiges Zwischenstück 14 und eine Spannmutter 15. Der Gewindebolzen 13 hat einen Kopfteil 16 an einem Ende, einen daran anschliessenden Schaftteil 17 mit glatter Mantelfläche und einen Gewindeabschnitt 18 am anderen Ende. Der Körper 12 hat ein Durchgangsloch in axialer Richtung und ist auf dem Schaftteil 17 so angeordnet, dass er mit einer Stirnseite am Kopfteil 16 anliegt. Zwischen Bohrungswand und Körper 12 sind die vier Dehnungsmessstreifen 5 eingelegt, die am Umfang des Körpers 12 gleichmässig verteilt angeordnet sind. Das Zwischenstück 14 hat eine Durchgangsbohrung in axialer Richtung und ist auf dem Schaftteil 17 so angeordnet, dass er an den Körper 12 anliegt. Die Spannmutter 15 ist auf dem Gewindeabschnitt 18 aufgeschraubt und hält die einzelnen Teile, so dass eine Baugruppe gebildet wird. Im Körper 12 und dem Zwischenstück 14 sind Durchlässe für die Anschlussdrähte 19 der Dehnungsmessstreifen vorgesehen. Die Anschlussdrähte sind über ein Kopfstück herausgeführt, das einstückig mit dem Zwischenstück 14 ausgebildet ist.

Der zu einer Baugruppe zusammengestellte Sensor wird in die Blindbohrung 2 eingesteckt. Durch Drehen der Spannmutter 15 wird der Elastomer-Körper 12 zusammengepresst. Dies bewirkt eine Verformung des Körpers 12 in radialer Richtung, wodurch die Dehnungsmessstreifen 5 gegen die Bohrungswand gepresst werden.

## Patentansprüche

1. Sensor zur Dehnungsmessung in einer Bohrung eines Bauteiles, gekennzeichnet durch einen zylindrischen Körper (4,12) aus elastischem Material, an dessen Umfang mindestens ein Dehnungsmessstreifen (5) angeordnet ist und der durch Spannmittel (7,8;13,14,15) gegen die Bohrungswand pressbar ist, wobei durch die Spannmittel eine axiale Kraft auf den Körper ausübbar ist, um eine Verformung des Körpers in radialer Richtung zu bewirken, so dass der Dehnungsmessstreifen (5) durch Reibungskräfte kraftschlüssig mit der Bohrungswand verbunden ist, um die durch Krafteinwirkung auf das die Bohrung (2) enthaltende Bauteil (1) erzeugte Dehnung zu messen.

2. Sensor nach Anspruch 1, dadurch gekennzeichnet, dass der Körper (4,12) aus einem Elastomer besteht.

3. Sensor nach Anspruch 1, dadurch gekennzeichnet, dass der Körper als fluidgefüllter Hohlkörper ausgebildet ist.

4. Sensor nach einem der Ansprüche 1 bis 3, dadurch gekennzeichnet, dass vorzugsweise vier Dehnungsmessstreifen (5) vorgesehen sind.

5. Sensor nach einem der Ansprüche 1 bis 4, wobei die Bohrung im Bauteil ein Sackloch ist, dadurch gekennzeichnet, dass der Körper (4) an einer Stirnseite einen dem Lochgrund angepassten Abschnitt hat und dass das Spannmittel eine Schraube (8) ist, die zwecks Aufbringen eines Druckes auf den Körper in das Loch einschraubbar ist, um den Dehnungsmessstreifen (5) gegen die Bohrungswand zu pressen.

6. Sensor nach Anspruch 5, dadurch gekennzeichnet, dass ein Zwischenstück (7) zwischen Körper (4) und Schraube (8) angeordnet ist.

7. Sensor nach einem der Ansprüche 1 bis 4, dadurch gekennzeichnet, dass der Körper (12) ein Durchgangsloch in axialer Richtung aufweist und dass das Spannmittel einen Gewindebolzen (13) mit einem Kopfteil (16) an einem Ende und mit einem Gewindeabschnitt (18) am anderen Ende, derart, dass ein eine glatte Mantelfläche aufweisender Schaftteil (17) vorhanden ist, auf dem der Körper (12) angeordnet ist, ein zylinderförmiges Zwischenstück (14) mit einer axialen Durchgangsbohrung, das mit einer Stirnseite am Körper (12) anliegend auf dem Gewindebolzen (13) angeordnet ist, und eine Spannmutter (15) umfasst, die auf den Gewindeabschnitt (18) aufgeschraubt ist; wobei der zwischen Kopfteil (16) und Zwischenstück (14) angeordnete Körper (12) durch den die Verschraubung erzeugbaren Druck verformbar ist, derart, dass der Dehnungsmessstreifen (5) gegen die Bohrungswand gepresst wird.

8. Sensor nach einem der Ansprüche 1 bis 7, dadurch gekennzeichnet, dass im Spannmittel Ausnehmungen zum Herausführen der Anschlussdrähte für den Dehnungsmessstreifen (5) vorgesehen sind.

## Claims

1. Sensor for the elongation measurement in a bore of a structure member, characterized by a cylinder-shaped body (4, 12) made of an elastic material, at least one wire strain gauge (5) being arranged at its circumference for pressing against the wall of the bore by pressing means (7, 8; 13, 14, 15), whereby an axial force is exerted on said body by the pressing means to cause a deformation of the body in radial direction such that the wire strain gauge (5) is in contact with the wall of the bore by frictional forces in a force-locked manner in order to measure the elongation caused by an acting of force onto the structure member (1) having the bore (2).

2. Sensor according to claim 1, characterized in that the body (4, 12) is made of an elastomer.

3. Sensor according to claim 1, characterized in that the body is a hollow body filled by a liquid.

4. Sensor according to one of claims 1 - 3, characterized in that preferably four wire strain gauges (5) are provided.

5. Sensor according to one of claims 1 - 4, whereby the bore in the structure member is a blind hole, characterized in that the body (4) includes a section at a front end which matches the base of said bore, and that the pressing means is a threaded bolt (8) which, in order to exert a pressure onto said body, is adapted to be screwed into said bore in order to press said wire strain gauge (5) against the wall of the bore.

6. Sensor according to claim 5, characterized in that an intermediate piece (7) is located between the body (4) and said threaded bolt (8).

7. Sensor according to one of claims 1 - 4, characterized in that the body (12) includes a through bore extending in axial direction and in that the pressing means includes a threaded bolt (13) having a head portion (16) at one end and a threaded portion (18) at the other end such that a shaft portion (17) having a smooth surface is provided on which the body (12) is located, further including a cylinder-shaped intermediate member (14), having an axial through bore, which contacts the body (12) with a front end and being located on the threaded bolt (13), and including a tensioning nut (15) which is threaded onto said threaded portion (18); whereby the body (12) positioned between the head portion (16) and the intermediate member (14) is adapted to be deformed by the pressure caused by this threaded structure in such a manner that the wire strain gauge (5) is pressed against the wall of the bore.

8. Sensor according to one of claims 1 - 7, characterized in that the pressing means comprises recesses for accessing the connection wires of the wire strain gauge (5).

## Revendications

1. Capteur pour une mesure d'allongement dans un trou d'une pièce de construction, caractérisé par un corps cylindrique (4, 12) en un matériau élastique, à la périphérie duquel est agencé au moins un ruban d'extensomètre (5) et pouvant être pressé contre la paroi du trou par l'action d'un dispositif de serrage (7, 8; 13, 14, 15) pouvant exercer sur le corps une force qui déforme celui-ci en direction radiale de manière à réunir le ruban d'extensomètre (5) par friction avec la paroi du trou afin de mesurer l'allongement résultant d'une force exercée sur l'élément de construction (1) dans lequel est ménagé le trou (2).

2. Capteur selon la revendication 1, caractérisé en ce que le corps (4, 12) consiste en un élastomère.

3. Capteur selon la revendication 1, caractérisé en ce que le corps est un corps creux rempli d'un fluide.

4. Capteur selon une des revendications 1 à 3, caractérisé en ce qu'il comporte de préférence quatre rubans d'extensomètre (5).

5. Capteur selon une des revendications 1 à 4, le trou étant un trou cylindrique borgne, caractérisé en ce que le corps (4) comporte à une extrémité frontale une partie adaptée au fond du trou, et que le dispositif de serrage est une vis (8) pouvant être vissée dans le trou pour presser le ruban d'extensomètre (5) contre la paroi du trou.

6. Capteur selon la revendication 5, caractérisé en ce qu'une pièce intermédiaire (7) est intercallée entre le corps (4) et la vis (8).

7. Capteur selon une des revendications 1 à 4, caractérisé en ce que le corps (12) possède un passage axial et que le dispositif de serrage comporte un boulon (13) ayant une tête (16) à une extrémité et une partie filetée (18) à l'autre de manière à présenter une partie de fût lisse (17) sur laquelle est disposé le corps (12), une pièce intermédiaire (14) avec un passage axial disposée sur le boulon (13) et dont une extrémité frontale s'appuie sur le corps (12), le dispositif comportant un écrou de serrage (15) vissé sur la partie filetée (18); le corps (12) situé entre la tête (16) et la pièce intermédiaire (14) étant déformable par la pression due au vissage de manière à presser le ruban d'extensomètre (5) contre la paroi du trou.

8. Capteur selon une des revendications 1 à 7, caractérisé en ce que le dispositif de serrage comporte des passages pour la sortie des fils conducteurs du ruban d'extensomètre (5).
